# EUROPÄISCHE PATENTSCHRIFT

(11) **EP 2 246 138 B1**
(45) Veröffentlichungstag und Bekanntmachung des Hinweises auf die Patenterteilung: **21.03.2012**
(21) Anmeldenummer: 10002012.2
(22) Anmeldetag: 26.02.2010
(51) Int. Cl.: B23F 19/10

(54) **Verfahren und Vorrichtung zum Bearbeiten der Zahnkanten stirnverzahnter Werkräder**
Method and device for processing the cog edges of machining wheels with frontal cogs
Procédé et dispositif de traitement des bords de dents de roues à tailler à interdigitée à l'avant

(30) Priorität: 29.04.2009 DE 102009019433
(43) Veröffentlichungstag der Anmeldung: 03.11.2010
(73) Patentinhaber: GLEASON-PFAUTER, Maschinenfabrik GmbH, 71636 Ludwigsburg (DE)
(72) Erfinder: Philippin, Matthias, 71277 Rutesheim (DE); Pastow, Jürgen, 74379 Ingersheim (DE)
(74) Vertreter: Seranski, Klaus

(56) Entgegenhaltungen:
- EP-A2- 0 282 046
- DE-A1- 4 328 801

## Beschreibung

Die Erfindung bezieht sich auf ein Verfahren zum Bearbeiten der zwischen jeder Stirnseite und den Zahnflanken stirnverzahnter Werkräder ausgebildeten Zahnkanten, bei dem ein eine Schneide aufweisendes und um eine Werkzeugdrehachse in einer Schneidrichtung drehend angetriebenes Bearbeitungswerkzeug dem um eine Werkraddrehachse drehend angetriebenen Werkrad nacheinander in zwei den Zahnkanten der beiden Stirnseiten zugeordneten Bearbeitungsstellungen zugestellt wird, und auf eine zur Durchführung die-ses Verfahrens geeignete Vorrichtung.

Bei einer derartigen bekannten Vorrichtung (EP 1 495 824 A2) sind das zum Anfasen der Zahnkanten dienende Bearbeitungswerkzeug und ein zur Erzeugung der Stirnverzahnung des Werkrades dienender Wätzfräser in einer Wälzfräsmaschine auf derselben Welle aufgespannt. Nachdem die Stirnverzahnung fertiggestellt ist, wird die Welle im Raum derart verstellt, daß das Anfaswerkzeug mit den Zahnkanten in Bearbeitungseingriff gelangt und dadurch die Anfasung erfolgt. Diese Bearbeitung wird zunächst an einer der beiden Stirnseiten des Werkrades ausgeführt. Danach wird die Welle derart verstellt, daß die Bearbeitung an der gegenüberliegenden anderen Stirnseite erfolgt. Dabei ist allerdings die Schneidrichtung des Anfaswerkzeuges an der einen Stirnseite von innen nach außen gerichtet, während sie an der gegenüberliegenden Stirnseite von außen nach innen gerichtet ist. Falls es gewünscht ist, an beiden Stirnseiten die Schneidrichtung von innen nach außen verlaufen zu lassen, müssen auf der Welle zwei Anfaswerkzeuge mit einander entgegengesetzten Schneidrichtungen aufgespannt und die Drehrichtung der Welle zwischen der Bearbeitung an den beiden Stirnseiten umgedreht werden. Weiterhin begrenzt die Anordnung des oder der Anfaswerkzeuge auf der Welle des Wälzfräsers dessen Länge. Ferner setzt diese Vorgehensweise voraus, daß zunächst die Stirnverzahnung vollständig hergestellt und erst danach der Anfasvorgang begonnen wird. Schließlich ist wegen der gemeinsamen Anordnung auf derselben Welle der Durchmesser des oder der Anfaswerkzeuge vom Durchmesser des Wälzfräsers abhängig. EP 0 282 046 offenbart eine Werkzeugmaschine gemäß den Oberbegriffen der Ansprüche 1 und 8 , bei der ein Tangentialschlitten vertikal an einem radial Verfahrbaren Haupfständer verfahrbar und zudem um eine horizontale Achse verschwenkbar ist. Auf der Werkzeugspindel sind eine Schleifschnecke und axial dazu versetzt eine Polierschnecke angeordnet.

Der Erfindung liegt die Aufgabe zugrunde, ein Verfahren der eingangs genannten Art zu schaffen, das eine flexiblere Verfahrensführung und eine Verkürzung der Bearbeitungszeit ermöglicht, sowie eine zur Durchführung des Verfahrens geeignete Vorrichtung anzugeben.

Erfindungsgemäß wird diese Aufgabe hinsichtlich des Verfahrens dadurch gelöst, daß zwischen den beiden Bearbeitungsstellungen die Werkzeugdrehachse um eine zu ihr orthogonale Schwenkachse zwischen zwei Schwenkstellungen verschwenkt wird, in denen die Schneidrichtungen in Bezug auf das Werkrad einander entgegengesetzt sind.

Bei dem erfindungsgemäßen Verfahren steht die Werkzeugdrehachse des Bearbeitungswerkzeuges als unabhängig verstellbare Achse zur Verfügung. Dadurch kann der Durchmesser des Bearbeitungswerkzeuges frei, insbesondere verhältnismäßig klein, gewählt werden, was Aufspannungskollisionen vermeiden hilft. Ferner sind in den beiden Schwenkstellungen bei gleichbleibender Drehrichtung des Antriebes des Bearbeitungswerkzeugs die Schneidrichtungen des Bearbeitungswerkzeuges einander entgegengesetzt, so daß in den beiden Bearbeitungssteltungen an den beiden stirnseitigen Enden der Verzahnung der Schnitt von innen nach außen erfolgen kann. Das Bearbeitungswerkzeug kann nur eine oder auch mehrere Schneiden aufweisen. Insbesondere kann das Bearbeitungswerkzeug zum Anfasen und/oder Entgraten der Zahnkanten ausgebildet sein. Weiterhin kann es durch eine geeignete Formgebung seiner Schneide/Schneiden und/oder Kinematik seiner Werkzeugdrehachse für eine einflankige oder eine zweiflankige Bearbeitung des Werkrades ausgebildet sein. Im erstgenannten Fall werden die linke und die rechte Zahnkanten einer Zahnlücke nacheinander bearbeitet, im zweitgenannte Fall gleichzeitig.

Vorzugsweise wird bei dem erfindungsgemäßen Verfahren die Stirnverzahnung durch Wälzfräsen oder Formfräsen erzeugt. Beim Wälzfräsen kann dann bereits an einer der beiden Stirnseiten die Bearbeitung während des Wälzfräsens hauptzeitparallel ausgeführt werden. Bei der hauptzeitparaltelen Vervendung des Fräswerkzeugs und des Bearbeitungswerkzeuges sind die Drehbewegungen ihrer beiden Werkzeugdrehachsen mit der Drehbewegung der Werkraddrehachse gekoppelt.

Das Bearbeitungswerkzeug kann ein- oder mehrschneidig ausgeführt sein. Es kann wie ein kurzer Wälzfräser mit helikaler Steigung oder wie ein universeller Fräser ausgebildet sein. Die für den lagerichtigen Eingriff zwischen der oder den Schneiden des Bearbeitungswerkzeugs und den Zahnkanten erforderliche Synchronisierung zwischen den Drehbewegungen des Werkrades und des Bearbeitungswerkzeuges erfolgt durch eine entsprechend programmierte Steuerung. Hierfür ist in einer vorteilhaften Ausführungsform vorgesehen, daß zunächst an einem Exemplar eines Werkrades die Stirnverzahnung fertiggestellt und die Steuerung der Dreh- und Zustellbewegungen des Bearbeitungswerkzeuges in Abhängigkeit von der Drehstellung des Werkrades durch ein Teach-in-Verfahren programmiert wird. Beispielsweise wird hierfür das Bearbeitungswerkzeug manuell in eine Verzahnungslücke des fertig verzahnten Werkrades eingefahren und die linke und rechte Zahnflanke abgetastet. Auf ähnliche Weise wird die durch die Drehstellung des Bearbeitungswerkzeuges bestimmte Lage seiner Schneide in Bezug auf die Stirnseite des Werkrades erfaßt. Durch die Übernahme dieser Erfassungsdaten in die Steuerung wird letztere für die konkrete Bearbeitungsaufgabe programmiert.

Eine zur Durchführung des erfindungsgemäßen Verfahrens geeignete Vorrichtung zum Bearbeiten der zwischen jeder Stirnseite und den Zahnflanken stirnverzahnter Werkräder ausgebildeten Zahnkanten, mit einer um eine Werkraddrehachse drehend antreibbaren Werkradaufnahme, auf. der das Werkrad aufspannbar ist, einer um eine Werkzeugdrehachse drehend antreibbaren Werkzeugspinde;, auf der ein eine Schneide aufweisendes Bearbeitungswerkzeug zur Drehung in einer Schneidrichtung aufspannbar ist, einer eine erste Linearbewegungsachse aufweisenden ersten Unearbewegungseinhett, durch die das Bearbeitungswerkzeug dem Werkrad zustellbar ist, und einer eine zweite Linearbewegungsschse aufweisenden zweiten Linearbewegungseinheit, durch die das Bearbeitungs-Werkzeug zwischen zwei den Zalinkanten der beiden Stirnseiten zugeordneten Bearbeitungsstellungen verstellbar ist, zeichnet sich erfindungsgemäß dadurch aus, daß eine eine zur Werkzeugdrehachse orthogonale Schwenkachse aufweisende Schwankbewegungseinrichtung vorgesehen ist, durch die zwischen den beiden Bearbeitungssteilungen die Werkzeugdrehachse zwischen zwei Schwenkstellungen verschwenkbar ist, in denen die Schneidrichtungen in Bezug auf das Werkrad einander entgegengesetzt sind.

Durch diese Verschwenkbarkeit der Werkzeugdrehachse wird erreicht, daß bei gleicht bleibender Drehrichtung des Antriebs der Werkzeugspindel die Schneidrichtungen des Bearbeitungswerkzeugs in den beiden Schwenkstellungen bezüglich des Werkrades zueinander gegenläufig sind. Daher werden die Fasen an den beiden einander entgegengesetzten Enden der Verzahnung in zueinander entgegengesetzten Richtungen geschnitten, beispielsweise in Richtungen, die von der axialen Mitte der Verzahnung zu den beiden Stirnseiten hin gerichtet sind, also von innen nach außen. Hierzu ist nur ein einziges Bearbeitungswerkzeug erforderlich. Dieses kann nur eine oder auch mehrere Schneiden aufweisen. Insbesondere kann das Bearbeitungswerkzeug als Anfas- und/oder Entgratwerkzeug ausgebildet sein.

Vorzugsweise ist die erfindungsgemäße Vorrichtung derart ausgebildet, daß in einem gegenüber einem von der Werkzeugspindel eingenommenen Raumbereich in der Umlaufrichtung der Werkraddrehachse versetzten Raumbereich ein mit dem Werkrad wälzend in Eingriff bringbares Wätzfräswerkzeug angeordnet ist, durch das die Stirnverzahnung des Werkrades herstellbar ist. Das Bearbeitungswerkzeug ist dabei von dem Wätzfräswerkzeug völlig unabhängig. Beispielsweise kann der Durchmesser des ersteren kleiner als der Durchmesser des letzteren gewählt werden, um Aufspannungskollisioilen zu vermeiden. Auch ist keine Ausrichtung des Bearbeitungswerkzeugs zum Wälzfräswerkzeug erforderlich. Insbesondere tritt keine Verringerung der spannbaren Länge des Wätzfräswerkzeugs ein. Schließlich kann haupL7eitparällel das Bearbeiten, beispielsweise Entgraten und/oder Anfasen, an einem der beiden stirnseitigen Verzahnungsenden durchgeführt werden, während sich das Wälzfräswerkzeug mit dem Werkrad im Bearbeitungseingriff befindet.

Weitere vorteilhafte Ausgestaltungen der Vorrichtung sind in den abhängigen Ansprüchen 9 bis 15 angegeben.

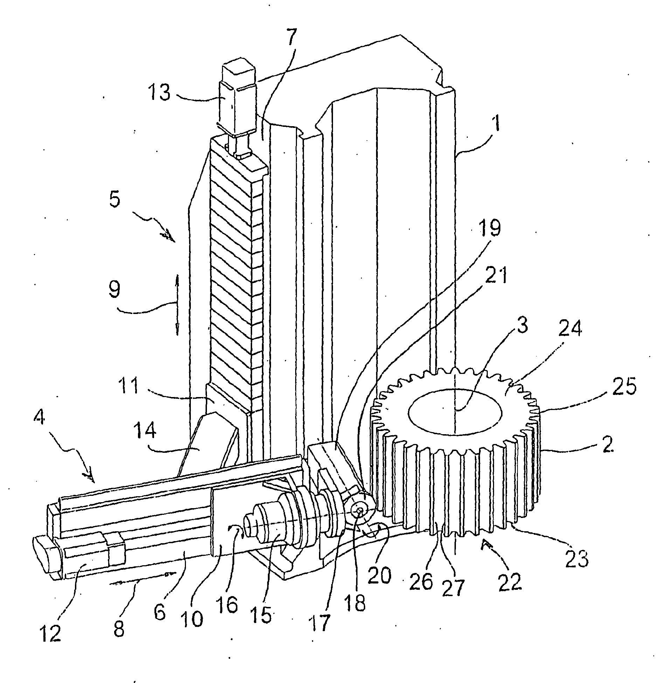

Nachstehend wird die Erfindung anhand eines Ausführuncgsbeispiels under Bezugnahme auf die Zeichnung näher erläutert.

Auf einem in der Zeichnung nicht dargestellten, horizontalen Maschinenbett sind in dessen Längsrichtung nebeneinander eine ebenfalls nicht dargestellte Werkradaufnahme und eine sich in ihrer Längsrichtung vertikal erstreckende Säule 1 abgestützt. Auf der Warkradaufnahme ist ein mit einer Stirnverzahnung zu versehendes Werkrad 2 um eine vertikale Werkraddrehachse 3 drehend aufspannbar. Der hierfür erforderliche Drehantrieb der Werkradaufnahme ist ebenfalls nicht dargestellt. Die vorstehend als nicht dargestellt bezeichneten Teile können in einer Weise ausgebildet sein, wie sie dem Fachmann von herkömmlichen Wätzfrasmaschinen bekannt ist.

Eine erste Linearbewegungseinheit 4 und eine zweite Linearbewegungseinheit 5 weisen jeweils einen Schlittenträger 6 bzw. 7 und einen daran längs einer ersten Linearbewegungsachse 8 bzw. einer zweiten Linearbewegungsachse 9 bewegbaren ersten Schlitten 10 bzw. zweiten Schlitten 11 auf. Der Antrieb des ersten und zweiten Schlittens 10, 11 längs seiner ersten bzw. zweiten Linearbewegungsachse 8, 9 erfolgt durch Spindeltriebe deren Antriebsmotore 12 bzw. 13 in der Zeichnung ebenfalls schematisch dargestellt sind:

Der Schlittenträger 7 der zweiten Linearbewegungseinheit 5 ist an einer zur Längsrichtung des Maschinenbettes parallelen Seitenfläche der Säule 1 angeordnet, so daß die zweite Linearbewegungsachse 9 parallel zur Werkraddrehachse 3 vertikal verläuft. Der Schlittenträger 6 der ersten Linearbewegungseinheit 4 ist mittels eines Querträgers 14 an dem zweiten Schlitten 11 derart festgelegt, daß die erste Linearbewegungsachse 8 der ersten Linearbewegungseinheit 4 in Richtung auf das Werkrad 2 ausgerichtet ist und orthogonal zur zweiten Linearbewegungsachse 9 verläuft.

Der erste Schlitten 10 trägt eine Schwenkbewegungseinrichtung 15, deren Schwenkachse 16 parallel zur ersten Linearbewegungsachse 8 verläuft. Auf einem um diese Schwenkachse 16 drehbaren Schwenkkopf 17 der Schwenkbewegungseinrichtung 15 ist eine Werkzeugspindel 18 mit ihrem Drehantrieb 19 derart abgestützt, daß sich ihre Werkzeugdrehachse 20 orthogonal zur Schwenkachse 16 erstreckt und diese schneidet.

Auf der Werkzeugspindel 13 ist ein im wesentlichen zylinderförmiges Bearbeitungswerkzeug, das als Anfaswerkzeug 21 ausgebildet ist, aufgespannt, das mindestens eine Schneide aufweist und von der Werkzeugspindel 18 in einer Schneidrichtung drehend angetrieben wird.

In dem in der Zeichnung dargestellten Zustand ist das Anfaswerkzeug 21 mittels der zweiten Linearbewegungseinheit 9 in eine vertikal untere Bearbeltungsstellung verfahren worden und wird in dieser Stellung mittels der ersten Linearbewegungseinheit 8 dem Werkrad 2 derart radial zugestellt, daß es mit dessen an die untere Stirnseite 22 des Werkrades 2 angrenzenden Zahnkanten 23 in einen Searbeitungscingriff gelangt, durch den dort eine Fase erzeugt wird. Dabei verläuft die Schneidrichtung in Bezug auf das Werkrad 2 von oben nach unten. Nachdem das Anfasen der unteren Zahnkanten 23 erfolgt ist, wird das Anfaswerkzeug 21 mittels der ersten Linearbewegungseinheit 4 von dem Werkrad 2 abgerückt und mittels der zweiten Linearbewegungseinheit 5 in eine vertikal obere Bearbeitungsstellung verfahren, in der es mittels der ersten Linearbewegungseinheit 4 den an die obere Stirnseite 24 des Werkrades 2 angrenzenden oberen Zahnkanten 25 zugestellt wird, um deren Anfasung zu bewirken. Bevor diese Zustellung erfolgt, wird jedoch die Werkzeugspindel 18 mittels der Schwenkbewegungseinrichtung 15 derart verschwenkt, daß die zu den linken Zahnflanken 26 weisende radiale Stirnseite des Anfaswerkzeugas 21 nach der Verschwenkung zu den rechten Zahnflanken 27 weist. Dadurch verläuft die Schneidrichtung in Bezug auf das Werkrad 2 von unten nach oben.

in der Längsrichtung des Maschinenbettes neben dem Werkrad 2 ist benachbart zu seiner der Säule 1 abgewandten Seite ein in der Zeichnung nicht dargestellter Träger für ein Wälzfräswerkzeug angeordnet. Letzteres wird mit dem Werkrad 2 in bekannter Weise zur Herstellung der Verzahnung in Bearbeitungseingriff gebracht.

### Verzeichnis der Bezugszeichen

- 1: Säule
- 2: Werkrad
- 3: Werkraddrehachse
- 4: erste Linearbewegungseinheit
- 5: zweite Linearbewegungseinheit
- 6, 7: Schlittenträger
- 8, 9: Linearbewegungsachsen
- 10, 11: Schlitten
- 12, 13: Antriebsmotore
- 14: Querträger
- 15: Schwenkbewegungseinrichtung
- 16: Schwenkachse
- 17: Schwenkkopf
- 18: Werkzeugspindel
- 19: Drehantrieb
- 20: Werkzeugdrehachse
- 21: Anfaswerkzeug
- 22: untere Stirnseite
- 23: Zahnkanten
- 24: obere Stirnseite
- 25: obere Zahnkanten
- 26: linke Zahnflanken
- 27: rechte Zahnflanke

## Patentansprüche

1. Verfahren zum Bearbeiten der zwischen jeder Stirnseite (22, 24) und den Zahnflanken (27, 27) stirnverzahnter Werkräder (2) ausgebildeten Zahnkanten (23, 25), bei dem ein eine Schneide aufweisende und um eine Werkzeugdrehachse (20) in einer Schneidrichtung drehend angetriebenes Bearbeitungswerkzeug (21) dem um eine Werkraddrehachse (3) drehend angetriebenen Werkrad (2) nacheinander in zwei den Zahnkanten (23, 25) der beiden Stirnseiten (22, 24) zugeordneten Bearbeitungsstellungen zugestellt wird, **dadurch gekennzeichnet, daß** zwischen den beiden Bearbeitungsstellungen die Werkzeugdrehachse (20) um eine zu ihr orthogonale Schwenkachse (16) zwischen zwei Schwenkstellungen verschwenkt wird, in denen die Schneidrichtungen in Bezug auf das Werkrad (2) einander entgegengesetzt sind.

2. Verfahren nach Anspruch 1, **dadurch gekennzeichnet, daß** in der Arbeitsstellung die Schneidrichtung jeweils zur Stirnseite hin gerichtet ist.

3. Verfahren nach Anspruch 1 oder 2, **dadurch gekennzeichnet, daß** die Stirnverzahnung durch Wälzfräsen erzeugt wird.

4. Verfahren nach Anspruch 3, **dadurch gekennzeichnet, daß** an einer der beiden Stirnseiten (22, 24) die Bearbeitung während des Wälzfräsens ausgeführt wird.

5. Verfahren nach Anspruch 4, **dadurch gekennzeichnet, daß** die Drehung einer für das Wälzfräsen drehend angetriebenen Wälzfräswerkzeugdrehachse und die Drehung der Werkzeugdrehachse des Bearbeitungswerkzeuges in Abhängigkeit von der Drehung der Werkraddrehachse aufeinander abgestimmt werden.

6. Verfahren nach Anspruch 1 oder 2, **dadurch gekennzeichnet, daß** die Stirnverzahnung durch Formfräsen erzeugt wird.

7. Verfahren nach einem der Ansprüche 1 bis 6, **dadurch gekennzeichnet, daß** zunächst an einem Exemplar eines Werkrades (2) die Stirnverzahnung fertiggestellt und die Steuerung der Dreh- und Zustellbewegungen des Bearbeitungswerkzeuges (21) in Abhängigkeit von der Drehsteilung des Werkrades (2) durch ein Teach-in-Verfshren programmiert wird.

8. Vorrichtung zum Bearbeiten der zwischen jeder Stirnseite (22, 24) und den Zahnflanken (26, 27) stirnverzahnter Werkräder (2) ausgebildeten Zahnkanten (21, 25), mit einer um eine Werkraddrehschse (3) drehend antreibbaren Werkradaufnahme, auf der das Werkrad (2) aufspannbar ist, einer um eine Werkzeugdrehachse (20) drehend antreibbaren Werkzeugspindel (18), auf der ein eine Schneide aufweisendes Bearbeitungswerkzeug (21) zur Drehung in einer Schneidrichtung aufspannbar ist, einer eine erste Linearbewegungsachse (8) ausweisenden ersten Linearbewegungseinheit (4), durch die das Bearbeitungswerkzeug (21) dem Werkrad (2) zustellbar ist, und einer eine zweite Linearbewegungsachse (9) aufweisenden zweiten Linearbewegungseinheit (5), durch die das Bearbeitungswerkzeug (21) zwischen zwei den Zahnkanten (23, 25) der beiden Stirnseiten (22, 24) zugeordneten Bearbeitungsstellungen verstellbar ist, wobei eine eine zur Werkzeugdrehachse (20) orthogonale Schwenkachse (16) aufweisende Schwenkbewegungseinrichtung (15) vorgesehen ist, **dadurch gekennzeichnet, daß** durch die Schwenkbewegungseinrichtung zwischen den beiden Bearbeitungsstellungen die Werkzeugdrehachse (20) zwischen zwei Schwenkstellungen verschwenkbar ist, in denen die Schneidrichtungen in Bezug auf das Werkrad (2) einander entgegengesetzt sind.

9. Vorrichtung nach Anspruch 8, **dadurch** gekenntzeichnet, daß sich die Werkzeugdrehachse (20) und die Schwenkachse (16) schneiden.

10. Vorrichtung nach Anspruch 8 oder 9, **dadurch gekennzeichnet, daß** die erste und die zweite Linearbewegungsachse (8, 9) zueinander orthogonal angeordnet sind.

11. Vorrichtung nach einem der Ansprüche 8 bis 10, **dadurch gekennzeichnet, daß** die zweite Linearbewegungsachse (9) und die Werkraddrehachse (3) zueinander parallel sind.

12. Vorrichtung nach einem der Ansprüche 8 bis 11, **dadurch gekennzeichnet, daß** die Werkraddrehachse (3) vertikal gerichtet ist.

13. Vorrichtung nach einem der Ansprüche 8 bis 12, **dadurch gekennzeichnet, daß** die Schwenkbewegungseinrichtung (15) an einem längs der ersten Linearbewegungsachse (8) bewegbaren ersten Schlitten (10) der ersten Linearbewsgungseinheit (4) angeordnet ist.

14. Vorrichtung nach Anspruch 13, **dadurch gekennzeichnet, daß** die erste Linearbewegungseinheit (4) an einem längs der zweiten Linearbewegungsachse (9) bewegbaren zweiten Schlitten (11) der zweiten Linearbewegungseinheit (5) ängeordnet ist.

15. Vorrichtung nach einem der Ansprüche 8 bis 14, **dadurch gekennzeichnet, daß** in einem gegenüber einem von der Werkzeugspindel (18) eingenommenen Raumbereich in der Umlaufrichtung der Werkraddrehachse (3) versetzten Raumbereich ein mit dem Werkrad (2) wälzend in Eingriff bringbares Wälzfräswerkzeug angeordnet ist, durch das die Stirnverzahnung des Werkrades (2) herstellbar ist.

## Claims

1. A method for machining the cog edges (23, 25) formed between each end face (22, 24) and the cog flanks (27, 27) of machining wheels (2) with frontal cogs, wherein a machining tool (21) having a blade and being driven rotationally around a tool axis of rotation (20) in a cutting direction is advanced to the machining wheel (2) driven rotationally around a machining wheel axis of rotation (3) consecutively in two machining positions assigned to the cog edges (23, 25) of the two end faces (22, 24), **characterised in that** between the two machining positions the tool axis of rotation (20) is swivelled around a swivel axis (16) orthogonal to the latter between two swivel positions in which the cutting directions are opposite to each other relative to the machining wheel (2).

2. The method according to Claim 1, **characterised in that** in the working position the cutting direction is respectively directed towards the end face.

3. The method according to Claim 1 or 2, **characterised in that** the frontal cogs are generated by hobbing.

4. The method according to Claim 3, **characterised in that** at one of the two end faces (22, 24) the machining is performed during the hobbing.

5. The method according to Claim 4, **characterised in that** the rotation of a hobbing tool axis of rotation that is rotationally driven for the hobbing and the rotation of the tool axis of rotation of the machining tool are coordinated as a function of the rotation of the machining wheel axis of rotation.

6. The method according to Claim 1 or 2, **characterised in that** the frontal cogs are generated by form milling.

7. The method according to any of Claims 1 to 6, **characterised in that** first the frontal cogs on one specimen of a machining wheel (2) are produced and the control of the rotation and advancing motions of the machining tool (21) is programmed by a teach-in method as a function of the rotating position of the machining wheel (2).

8. A device for machining the cog edges (23, 25) formed between each end face (22, 24) and the cog flanks (26, 27) of machining wheels (2) with frontal cogs, comprising a machining wheel retainer that can be driven rotationally around a machining wheel axis of rotation (3) on which the machining wheel (2) can be clamped, a tool spindle (18) that can be driven rotationally around a tool axis of rotation (3) on which a machining tool (21) having a blade can be clamped in order to rotate in a cutting direction, a first linear motion unit (4) having a first linear motion axis (8) by means of which the machining tool (21) can be advanced to the machining wheel (2), and a second linear motion unit (5) having a second linear motion axis (9) by means of which the machining tool (21) can be adjusted between two machining positions assigned to the cog edges (23, 25) of the two end faces (22, 24), a swivel motion device (15) having a swivel axis (16) orthogonal to the tool axis of rotation (2) being provided, **characterised in that** by means of the swivel motion device between the two machining positions the tool axis of rotation (20) can be swivelled between two pivot positions in which the cutting directions are opposite each other relative to the machining wheel (2).

9. The device according to Claim 8, **characterised in that** the tool axis of rotation (20) and the swivel axis (16) intersect.

10. The device according to Claim 8 or 9, **characterised in that** the first and the second linear motion axis (8, 9) are arranged orthogonally relative to each other.

11. The device according to any of Claims 8 to 10, **characterised in that** the second linear motion axis (9) and the machining wheel axis of rotation (3) are parallel to each other.

12. The device according to any of Claims 8 to 11, **characterised in that** the machining wheel axis of rotation (3) is directed vertically.

13. The device according to any of Claims 8 to 12, **characterised in that** the swivel motion device (15) is arranged at a first carriage (10) of the first linear motion unit (4) which can move along the first linear motion axis (8).

14. The device according to Claim 13, **characterised in that** the first linear motion unit (4) is arranged at a second carriage (11) of the second linear motion unit (5) which can be moved along the second linear motion axis (9).

15. The device according to any of Claims 8 to 14, **characterised in that** in a spatial area that is offset relative to a spatial area taken up by the tool spindle (18) in the direction of circulation there is a hobbing tool that can be engaged with the machining wheel (2) by means of which the frontal cogs of the machining wheel (2) can be produced.

## Revendications

1. Procédé d'usinage d'arêtes de dents (23, 25) constituées entre chaque face frontale (22, 24) et les flancs de dent (26, 27) d'ébauches de roues dentées (2) à denture frontale , dans lequel un outil d'usinage (21) présentant un taillant et entraîné en rotation sur un axe de rotation d'outil (20) dans un sens de coupe est amené à l'ébauche de roue dentée (2), entraînée rotative sur un axe d'ébauche de roue dentée (3), consécutivement dans deux positions d'usinage associées aux arêtes de dent (23, 25) des deux faces frontales (22, 24), **caractérisé en ce que** l'axe de rotation d'outil (20) subit, entre les deux positions d'usinage, un pivotement sur un axe de pivotement (16) orthogonal à celui-ci entre deux positions de pivotement dans lesquelles les sens de coupe sont opposés l'un à l'autre par rapport à l'ébauche de roue dentée (2).

2. Procédé selon la revendication 1, **caractérisé en ce que**, dans la position de travail, le sens de coupe est chaque fois en direction de la face frontale.

3. Procédé selon la revendication 1 ou 2, **caractérisé en ce que** la denture frontale est produite par taille en développante.

4. Procédé selon la revendication 3, **caractérisé en ce que** l'usinage est réalisé sur l'une des deux faces frontales (22, 24) au cours de la taille en développante.

5. Procédé selon la revendication 4, **caractérisé en ce que** la rotation d'un axe de rotation d'outil de taille en développante entraîné en rotation pour réaliser la taille en développante et la rotation de l'axe de rotation de l'outil d'usinage sont ajustés l'un par rapport à l'autre en fonction de la rotation de l'axe de rotation de l'ébauche de roue dentée.

6. Procédé selon la revendication 1 ou 2, **caractérisé en ce que** la denture frontale est produite par fraisage de profil.

7. Procédé selon l'une des revendications 1 à 6, **caractérisé en ce qu'**on réalise tout d'abord la denture frontale sur un exemplaire d'une ébauche de roue dentée (2) et on programme la commande des mouvements de rotation et d'amenée de l'outil d'usinage (21) en fonction de la position de rotation de l'ébauche de roue dentée (2) par le biais d'un procédé d'apprentissage.

8. Dispositif d'usinage d'arêtes de dents (23, 25) constituées entre chaque face frontale (22, 24) et les flancs de dent (26, 27) d'ébauches de roues dentées (2) à denture frontale, comportant : une assise pour ébauche de roue dentée susceptible d'être entraînée en rotation sur un axe de rotation (3) d'ébauche de roue dentée, sur laquelle l'ébauche de roue dentée (2) peut être montée ; une broche d'outil (18) susceptible d'être entraînée en rotation sur un axe de rotation (20) de l'outil et sur laquelle peut être installé un outil d'usinage (21) présentant un tranchant et destiné à être soumis à rotation dans un sens de coupe ; une première unité de déplacement linéaire (4) présentant un premier axe de déplacement linéaire (8) et permettant l'amenée de l'outil d'usinage (21) à l'ébauche de roue dentée (2) ; et une deuxième unité de déplacement linéaire (5) présentant un deuxième axe de déplacement linéaire (9) et permettant de faire basculer l'outil d'usinage (21) entre deux positions d'usinage associées aux arêtes de dent (23, 25) des deux faces frontales (22, 24) ; dans lequel est prévu un dispositif de déplacement de pivotement (15) présentant un axe de pivotement (16) orthogonal à l'axe de rotation d'outil (20), **caractérisé en ce que** le dispositif de déplacement de pivotement (15) permet à l'axe de rotation d'outil (20), entre les deux positions d'usinage, de pivoter entre deux positions de pivotement dans lesquelles les sens de coupe sont opposés l'un à l'autre par rapport à l'ébauche de roue dentée (2).

9. Dispositif selon la revendication 8, **caractérisé en ce que** l'axe de rotation d'outil (20) et l'axe de pivotement (16) s'entrecoupent.

10. Dispositif selon la revendication 8 ou 9, **caractérisé en ce que** le premier et le deuxième axe de déplacement linéaire (8, 9) sont disposés orthogonalement l'un par rapport à l'autre.

11. Dispositif selon l'une des revendications 8 à 10, **caractérisé en ce que** le deuxième axe de déplacement linéaire (9) et l'axe de rotation (3) d'ébauche de roue dentée sont parallèles l'un à l'autre.

12. Dispositif selon l'une des revendications 8 à 11, **caractérisé en ce que** l'axe de rotation (3) d'ébauche de roue dentée est orienté verticalement.

13. Dispositif selon l'une des revendications 8 à 12, **caractérisé en ce que** le dispositif de déplacement de pivotement (15) est disposé sur un premier coulisseau (10), d'une première unité de déplacement linéaire (4), qui est déplaçable le long d'un premier axe de déplacement linéaire (8).

14. Dispositif selon la revendication 13, **caractérisé en ce que** la première unité de déplacement linéaire (4) est disposée sur un deuxième coulisseau (11), de la deuxième unité de déplacement linéaire (5), qui est déplaçable le long du deuxième axe de déplacement linéaire (9).

15. Dispositif selon l'une des revendications 8 à 14, **caractérisé en ce qu'**un outil de taille en développante susceptible de venir en prise selon une développante avec l'ébauche de roue dentée (2), permettant la production de la denture frontale de l'ébauche de roue dentée (2), est disposé dans une zone spatiale décalée par rapport à une zone spatiale occupée par la broche d'outil (18), dans la direction périphérique de l'axe de rotation (3) de l'ébauche de roue dentée.
